# EUROPÄISCHE PATENTSCHRIFT

(11) **EP 2 739 874 B1**
(45) Veröffentlichungstag und Bekanntmachung des Hinweises auf die Patenterteilung: **27.04.2016**
(21) Anmeldenummer: 12746002.0
(22) Anmeldetag: 13.07.2012
(51) Int. Cl.: F16D 21/06, F16D 25/08

(54) **NEHMERZYLINDER**
SLAVE CYLINDER
CYLINDRE RÉCEPTEUR

(30) Priorität: 05.08.2011 DE 102011080544; 14.06.2012 DE 102012209943
(43) Veröffentlichungstag der Anmeldung: 11.06.2014
(73) Patentinhaber: Schaeffler Technologies AG & Co. KG, 91074 Herzogenaurach (DE)
(72) Erfinder: BOSNJAK, Daniel, F-67470 Seltz (FR); KRAHTOV, Luben, 76530 Baden-Baden (DE); BRETON, Ellyn, 27710 Saint Georges Motel (FR)
(86) Internationale Anmeldenummer: PCT/DE2012/000704
(87) Internationale Veröffentlichungsnummer: WO 2013/020532

(56) Entgegenhaltungen:
- WO-A1-2007/041990
- DE-A1- 19 518 833
- FR-A1- 2 757 590
- US-A1- 2001 004 038

## Beschreibung

Die Erfindung betrifft einen Nehmerzylinder, insbesondere in der Art eines CSC (Concentric Slave Cylinder) nach dem Oberbegriff des ersten Patentanspruchs, welcher als Ausrücksystem einer Fahrzeugkopplung dient.

Aus der Druckschrift EP 1 970 589 A2 ist ein Nehmerzylinder bekannt, der ein Nehmerzylindergehäuse aufweist, das konzentrisch zu einer Getriebeeingangswelle angeordnet ist, wobei in einem Gehäuse zumindest ein kreisringförmiger Druckraum angeordnet ist, in dem ein Ringkolben axial verschiebbar geführt ist, der in Richtung zum Druckraum mit einer zum Druckraum abdichtenden Dichtung versehen ist, wobei die Dichtung über einen Dichtringträger mit dem Kolben verbunden ist. Nachteilig wirkt sich bei derartigen Anordnungen das vorhandene Spiel zwischen Kolben und Dichtringträger sowie zwischen Dichtringträger und Dichtring aus, wodurch eine erhöhte Volumenaufnahme des Hydraulikmediums zu verzeichnen ist und die Hysterese der Dichtung ungünstig beeinflusst wird.

Weiterhin ist aus der WO 2007/041990 A1 ein Nehmerzylinder gemäß den Merkmalen des Oberbegriffs des unabhängigen Patentanspruchs 1 bekannt.

Aufgabe der Erfindung ist es, einen Nehmerzylinder, insbesondere in der Art eines CSC zu entwickeln, dessen Kolben / Dichtungsanordnung ein geringes Spiel aufweist und der eine Verringerung der Volumenaufnahme und der Hysterese der Dichtung gewährleistet.

Diese Aufgabe wird erfindungsgemäß mit den Merkmalen des ersten Patentanspruchs gelöst.

Vorteilhafte Ausgestaltungen ergeben sich aus den Unteransprüchen.

Der Nehmerzylinder ist insbesondere in der Art eines CSC (Concentric Slave Cylinder) ausgebildet, der ein Gehäuse aufweist, in dem zumindest ein kreisringförmiger Druckraum angeordnet ist, in dem ein Ringkolben axial verschiebbar geführt ist, welcher in Richtung zum Druckraum mit einer zum Druckraum abdichtenden Dichtung versehen ist, wobei die Dichtung an ihrem kolbenseitigen Bereich in dem Ringkolben befestigt ist. Der Ringkolben weist eine Ringnut auf, in welche die Dichtung, die in Form einer Nutringdichtung ausgebildet ist, mit ihrem kolbenseitigen Bereich durch Durchbrüche eines Dichtringträgers hindurch einknüpfbar ist derart, dass der Dichtringträger zwischen einer Stirnseite des Ringkolbens und Dichtlippen der Dichtung sitzt und mittels der Dichtung am Ringkolben befestigt ist.

Dabei ist der Ringkolben an seiner in Richtung zum Druckraum weisenden Stirnseite mit der Ringnut versehen, in welche die Dichtung eingeknüpft ist.

An die in Richtung zum Druckraum weisende Stirnseite des Ringkolbens schließt sich der Dichtringträger an, den die Dichtung in den Ringkolben eingreifend durchdringt und wobei die Dichtung in Richtung zum Druckraum einen über den Dichtringträger hinausragenden Bereich aufweist. Der Dichtringträger stützt damit den über diesen in Richtung zum Druckraum hinausragenden Bereich der Dichtung in Richtung zum Gehäuse und/oder zum Ringkolben ab.

Der über den Dichtringträger hinausragende Bereich der Dichtung weist eine radial nach außen weisende Dichtlippe und eine radial nach innen weisende Dichtlippe auf, die den Druckraum zum Gehäuse abdichten und durch den Dichtringträger abgestützt werden.

Durch die Ringnut weist der ringförmige Kolben in Richtung zum Dichtringträger eine innere ringförmige erste Stirnseite und eine äußere ringförmige zweite Stirnseite auf. Der Dichtringträger besitzt einen Innenring und einen mit diesem über Verbindungsstege verbundenen Außenring, wobei im montierten Zustand der Innenring an der ersten Stirnseite und der Außenring an der zweiten Stirnseite des Ringkolbens anliegt. Durch die Durchbrüche des Dichtringträgers, die zwischen dem Innenring, dem Außenring und den Verbindungsstegen gebildet werden, greift die Ringnutdichtung in die Ringnut des Ringkolbens ein.

Die Nutringdichtung ist an ihrem Ende, welches in den Kolben eingreift, mit Ausnehmungen versehen, in welche im montierten Zustand die Verbindungsstege des Dichtringträgers eingreifen.

Der Kolben und/oder der Dichtringträger können aus einem faserverstärktem Material gefertigt sein und eine hohe Abriebfestigkeit zu gewährleisten.

Wirkt im Druckraum des Nehmerzylinders ein Druck, werden der Innenring des Dichtringträgers gegen die erste Stirnseite des Kolbens und der Außenring des Dichtringträgers gegen die zweite Stirnseite des Kolbens gepresst. Weiterhin stützt sich der Außendurchmesser des Dichtringträgers am Außendurchmesser des Druckraums und der Innendurchmesser des Dichtringträgers am Innendurchmesser des Druckraums ab und der Nutdichtring wird durch den Innenring und durch den Außenring des Dichtringträgers abgestützt. Dabei weist der Dichtringträger in Richtung zur ersten und zweiten Dichtlippe eine abgerundete Kontur und die Dichtlippen eine korrespondierende konkave Ausnehmung auf, so dass bei einer Druckbeaufschlagung aus Richtung des Druckraums die erste Dichtlippe gegen den Innenring gepresst und aufgrund der Kontur zum Innenring radial nach innen und die zweite Dichtlippe gegen den Außenring und aufgrund der daran anliegenden Kontur radial nach außen gepresst wird, so dass die Dichtwirkung unterstützt wird. Weiterhin werden durch den Dichtringträger die Volumenaufnahme und die Hysterese der Nutringdichtung reduziert.

Die Erfindung wird nachfolgend anhand eines Ausführungsbeispiels und zugehöriger Zeichnungen näher erläutert.

Es zeigen:
Figur 1 einen Teillängsschnitt durch einen Nehmerzylinder in Form eines CSC, welcher zur Betätigung einer Doppelkupplung dient,

- Figur 2: die Einzelheit X gemäß Figur 1
- Figur 3: die dreidimensionale Darstellung der Nutringdichtung,
- Figur 4: die dreidimensionale Darstellung des Dichtringträgers,
- Figur 5: die dreidimensionale Darstellung der Nutringdichtung,
- Figur 6: die Vorderansicht einer Einheit aus Einrücklager, Kolben, Dichtringträger und Nutringdichtung,
- Figur 7: einen Längsschnitt A-A der Einheit aus Einrücklager, Kolben, Dichtringträger und Nutringdichtung gemäß Figur 6,
- Figur 8: die Einzelheit Y gemäß Figur 7,
- Figur 9: die Einzelheit Z gemäß Figur 7.

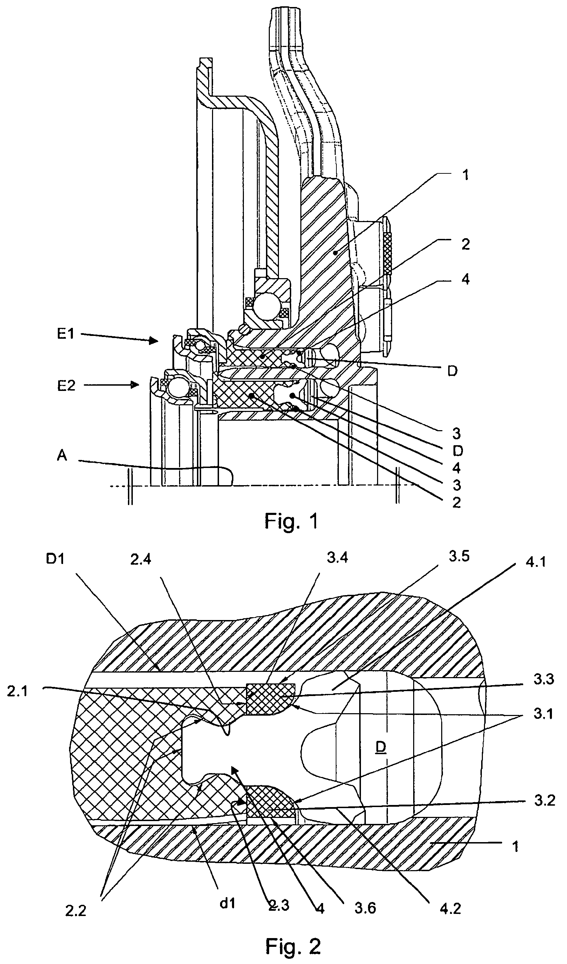

Der Nehmerzylinder ist gemäß Figur 1 als CSC Concentric Slave Cylinder ausgebildet und dient zur Betätigung einer Doppelkupplung. Er weist ein Gehäuse 1 auf, in welchem ein erster und ein zweiter Ringkolben, die beide mit dem Bezugszeichen 2 versehen sind, zueinander konzentrisch jeweils in einem seperaten Druckraum D in Richtung zur Längsachse A verschiebbar angeordnet sind. Der radial außen liegende Kolben 2 wirkt auf ein radial außen angeordnetes erstes Einrücklager E1 und der radial innen angeordnete Kolben 2 auf ein radial innen angeordnetes zweites Ausrücklager E2. An jedem Kolben 2 ist in Richtung zum Druckraum D ein Nutdichtring 4 befestigt, der zu dem Gehäuse 1 abdichtet und sich an einem Dichtringträger 3 abstützt.

Der Nutdichtring 4 ist gemäß Figur 2 über bekannte Formelemente mit dem Kolben 2 durch den Kolbenformschluss 2.2 verbunden. Dadurch kann der Nutdichtring 4 mit seinem kolbenseitigen Ende in eine korrespondierende Ringnut 2.1 des Kolbens 2 eingeknüpft werden. Durch die Ringnut 2.1 weist der Ringkolben 2 eine radial innere ringförmige erste Stirnseite 2.3 und eine radial äußere ringförmige zweite Stirnseite 2.4 auf. Weiterhin durchdringt der Nutdichtring 4 den Dichtringträger 3. Der über den Dichtringträger 3 hinausragende Bereich des Nutdichtrings 4 weist eine radial nach außen weisende Dichtlippe 4.1 und eine radial nach innen weisende Dichtlippe 4.2 auf, die zum Gehäuse 1 und somit zum Druckraum D abdichten. Der Dichtringträger 3 weist zum Nutdichtring 4 einen Dichtungsformschluss 3.1 auf, der in Richtung zu jeder Dichtlippe 4.1, 4.2 in Form eines Radius ausgebildet ist, an den der Nutdichtring mit einer korrespondierenden Form anlegbar ist.

Der Dichtringträger 3 besitzt einen Innenring 3.2, der im montierten Zustand an der ersten Stirnseite 2.3 des Kolbens 2 anliegt sowie einen Außenring 3.3, der an der zweiten Stirnseite 2.4 des Kolbens 2 zur Anlage kommt.

Bei einem im Druckraum D wirkenden Druck werden der Innenring 3.2 durch die Dichtlippe 4.2 gegen die erste Stirnseite 2.3 und der Außenring 3.3 mit ihrer Unterseite 3.4 gegen die zweite Stirnseite 2.4 gepresst, somit ist der Dichtringträger 3 durch den Kolben 2 abgestützt. Der Nutdichtring 4 wird durch den Innenring 3.2 und durch den Außenring 3.3 des Dichtringträgers 3 abgestützt. Der Außendurchmesser 3.5 des Dichtringträgers 3 ist dabei mit dem radial außen liegenden Durchmesser D1 des Druckraums D abgestützt und der Innendurchmesser 3.6 des Dichtringträgers 3 ist mit dem radial innen liegenden Durchmesser d1 des Druckraums D abgestützt.

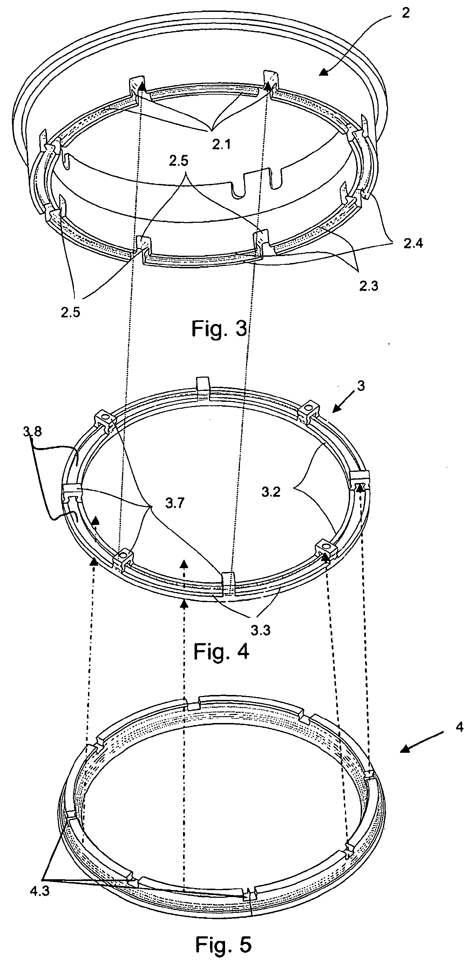

Aus den Figuren 3 bis 4 sind die dreidimensionalen Darstellungen des Ringkolbens 2, des Dichtringträgers 3 und des Nutdichtrings 4 ersichtlich.

Der Ringkolben 2 weist gemäß Figur 3 durch die Ringnut 2.1, eine radial innere ringförmige erste Stirnseite 2.3 und eine radial äußere ringförmige zweite Stirnseite 2.4 auf. Quer zur hier nicht bezeichneten Längsachse erstrecken sich in dem Kolben 2 aus Richtung der Stirnseiten 2.3, 2.4 nutartige Ausnehmungen 2.5.

Aus Figur 4 ist ersichtlich, dass der Dichtringträger 3 einen Innenring 3.2 und einen Außenring 3.3 aufweist, die über Verbindungsstege 3.7 miteinander zu einem Bauteil verbunden sind, so dass im montierten Zustand der Innenring 3.2 an der ersten Stirnseite 2.3 und der Außenring 3.3 an der zweiten Stirnseite 2.4 des Kolben 2 zur Anlage kommen. Dabei greifen die Verbindungsstege 3.7 entsprechend der eng punktierten Pfeile in die Ausnehmungen 2.5 des Kolbens 2 ein, wodurch der Dichtringträger 3 verdrehsicher am Kolben 2 anliegt. Die Verbindungsstege 3.7 sind brückenartig ausgebildet.

Durch die Durchbrüche 3.8 des Dichtringträgers 3, die durch den Innenring 3.2, den Außenring 3.3 und die Verbindungsstege 3.7 gebildet werden, greift bei der Montage der Nutdichtring 4 (s. strichpunktierte Pfeile) und wird in die Ringnut 2.1 des Ringkolbens 2 eingeknüpft. Dabei sollte ein gewisses Spiel in diesem Bereich erhalten bleiben.

Weiterhin weist der in Figur 5 dargestellte Nutdichtring 4 an seinem Ende, welches in den Ringkolben 2 eingreift, Ausnehmungen 4.3 auf, in welche im montierten Zustand die Verbindungsstege 3.7 des Dichtringträgers 3 eingreifen, was durch die gestrichelten Pfeile angedeutet ist.

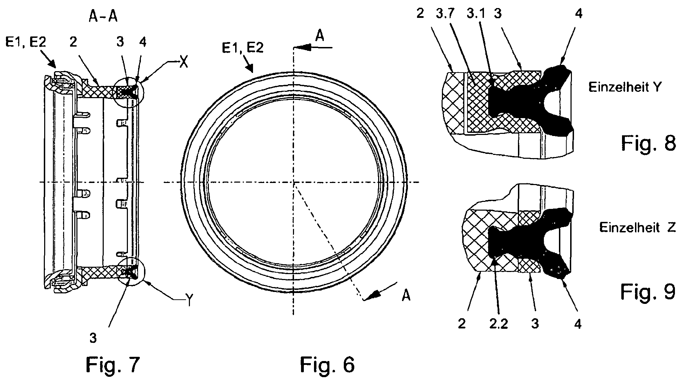

Figur 6 zeigt nochmals die Vorderansicht und Figur 7 den Längsschnitt A-A einer Einheit aus Einrücklager (E1 oder E2), Kolben 2, Dichtringträger 3 und Nutringdichtung 4 und die Figur 8 die Einzelheit Y gemäß Figur 7 sowie Figur 9 die Einzelheit Z gemäß Figur 7.

Die Einzelheit Y zeigt dabei einen Schnitt durch einen Verbindungssteg 3.7 des Dichtringträgers 3, aus dem hervorgeht, dass der Nutdichtring 4 einen Dichtungsformschluss 3.1 zum Dichtringträger 3 durch korrespondierende Formelemente aufweist.

Bei der Einzelheit Z liegt der Schnitt außerhalb des Verbindungssteges des Dichtringträgers 3 und es ist erkennbar, dass der Nutdichtring 3 den Dichtringträger 3 durchdringt und einen Kolbenformschluss 2.2 zum Ringkolben 2 aufweist, der ebenfalls durch korrespondierende Formelemente gebildet wird.

Mit der erfindungsgemäßen Lösung wird die Volumenaufnahme und Hysterese der Kolbendichtung für einen CSC reduziert, da die Dichtung direkt in den Kolben eingeknüpft wird. Der Dichtringträger 3 wirkt dabei als Armierungsring beidseitig an der Dichtung und verbessert die Dichtwirkung.

### Bezugszeichenliste

- 1: Gehäuse
- 2: Kolben,
- 2.1: Ringnut
- 2.2: Kolbenformschluss
- 2.3: erste Stirnseite
- 2.4: zweite Stirnseite
- 2.5: nutartige Ausnehmungen
- 3: Dichtringträger
- 3.1: Dichtungsformschluss
- 3.2: Innenring
- 3.3: Außenring
- 3.4: Unterseite
- 3.5: Außendurchmesser des Dichtringträgers
- 3.6: Innendurchmesser des Dichtringträgers
- 3.7: Verbindungsstege
- 3.8: Durchbrüche
- 4: Nutdichtring
- 4.1: radial nach außen weisende Dichtlippe
- 4.2: radial nach innen weisende Dichtlippe
- 4.3: Ausnehmungen
- A: Längsachse
- D: Druckraum
- D1: radial außen liegender Durchmesser des Druckraums
- d1: radial innen liegender Durchmesser des Druckraums
- E1: erstes Einrücklager
- E2: zweites Einrücklager

## Patentansprüche

1. Nehmerzylinder, insbesondere in der Art eines CSC (Concentric Slave Cylinder), der ein Gehäuse (1) aufweist in dem zumindest ein kreisringförmiger Druckraum (D) angeordnet ist, in dem ein als Ringkolben ausgebildeter Kolben (2) axial verschiebbar geführt ist, welcher in Richtung zum Druckraum (D) mit einer abdichtenden Dichtung versehen ist, und die Dichtung an ihrem kolbenseitigen Bereich am dem Ringkolben (2) befestigt ist, **dadurch gekennzeichnet, dass** der Ringkolben (2) eine Ringnut (2.1) aufweist, in welche die Dichtung, die in Form eines Nutdichtrings (4) ausgebildet ist, mit ihrem kolbenseitigen Bereich durch Durchbrüche (3.8) eines Dichtringträgers (3) hindurch einknüpfbar ist derart, dass der Dichtringträger (3) zwischen einer Stirnseite des Ringkolbens (2) und Dichtlippen des Nutdichtrings (4) sitzt und mittels des Nutdichtrings (4) am Ringkolben (2) fixiert ist.

2. Nehmerzylinder nach Anspruch 1, **dadurch gekennzeichnet, dass** sich an die in Richtung zum Druckraum (D) weisende Stirnseite des Ringkolbens (2) der Dichtringträger (3) anschließt, den die Dichtung in den Ringkolben (2) eingreifend durchdringt und wobei die Dichtung in Richtung zum Druckraum (D) einen über den Dichtringträger (3) hinausragenden Bereich aufweist.

3. Nehmerzylinder nach Anspruch 1 oder 2, **dadurch gekennzeichnet, dass** der Dichtringträger (3) den über diesen in Richtung zum Druckraum (D) hinausragenden Bereich der Dichtung in Richtung zum Gehäuse (1) und/oder zum Ringkolben (2) abstützt.

4. Nehmerzylinder nach einem der Ansprüche 1 bis 3, **dadurch gekennzeichnet, dass** der über den Dichtringträger (3) hinausragende Bereich der Dichtung eine radial nach außen weisende Dichtlippe (4.1) und eine radial nach innen weisende Dichtlippe (4.2) aufweist, die zum Gehäuse (1) abdichten.

5. Nehmerzylinder nach einem der vorangehenden Ansprüche, **dadurch gekennzeichnet, dass** der Ringkolben (2) in Richtung zum Dichtringträger (3) durch die Ringnut (2.1) eine innere ringförmige erste Stirnseite (2.3) und eine äußere ringförmige zweite Stirnseite (2.4) aufweist und dass der Dichtringträger (3) einen Innenring (3.2) und einen mit diesem über Verbindungsstege (3.7) verbundenen Außenring (3.3) aufweist und dass im montierten Zustand der Innenring (3.2) an der ersten Stirnseite (2.3) und der Außenring (3.3) an der zweiten Stirnseite (2.4) des Ringkolbens (2) anliegen und dass durch die Durchbrüche (3.8) des Dichtringträgers (3), die durch den Innenring (3.2), den Außenring (3.3) und die Verbindungsstege (3.7) gebildet werden, der Nutdichtring (4) greift und in die Ringnut (2.1) des Ringkolbens (2) einknüpfbar ist.

6. Nehmerzylinder nach Anspruch 5, **dadurch gekennzeichnet, dass** der Nutdichtring (4) an dem Ende, welches in den Ringkolben (2) eingreift, Ausnehmungen (4.3) aufweist, in welche im montierten Zustand die Verbindungsstege (3.7) des Dichtringträgers (3) eingreifen.

7. Nehmerzylinder nach einem der vorangehenden Ansprüche, **dadurch gekennzeichnet, dass** der Ringkolben (2) und/oder der Dichtringträger (3) aus einem faserverstärkten Material besteht.

8. Nehmerzylinder nach einem der Ansprüche 5 bis 7, **dadurch gekennzeichnet, dass** bei einem im Druckraum D wirkenden Druck
- der Innenring (3.2) des Dichtringträgers (3) gegen die erste Stirnseite (2.3) des Ringkolbens (2) gepresst wird,
- der Außenring (3.3) des Dichtringträgers (3) gegen die zweite Stirnseite (2.4) des Ringkolbens (2) gepresst wird,
- der Außendurchmesser (3.5) des Dichtringträgers (3) sich am radial außen liegenden Durchmesser (D1) des Druckraums (D) abstützt
- der Innendurchmesser (3.6) des Dichtringträgers (3) sich am radial innen liegender Durchmesser (d1) des Druckraums (D) abstützt und
- der Nutdichtring (4) durch den Innenring (3.2) und durch den Außenring (3.3) des Dichtringträgers (3) abgestützt ist.

## Claims

1. Slave cylinder, in particular of the CSC (concentric slave cylinder) type, which has a housing (1), in which at least one circularly annular pressure chamber (D) is arranged, in which a piston (2) which is configured as an annular piston is guided axially displaceably, which piston (2) is provided with a sealing gasket in the direction of the pressure space (D), and the gasket is fastened to the annular piston (2) on its piston-side region, **characterized in that** the annular piston (2) has an annular groove (2.1), into which the gasket which is configured in the form of a groove sealing ring (4) can be snapped with its piston-side region through apertures (3.8) of a sealing ring carrier (3), in such a way that the sealing ring carrier (3) is seated between an end side of the annular piston (2) and sealing lips of the groove sealing ring (4) and is fixed on the annular piston (2) by means of the groove sealing ring (4).

2. Slave cylinder according to Claim 1, **characterized in that** the end side of the annular piston (2) which points in the direction of the pressure chamber (D) is adjoined by the sealing ring carrier (3), through which the gasket penetrates in an engaging manner into the annular piston (2), and the gasket having a region which protrudes beyond the sealing ring carrier (3) in the direction of the pressure space (D).

3. Slave cylinder according to Claim 1 or 2, **characterized in that** the sealing ring carrier (3) supports that region of the gasket in the direction of the housing (1) and/or the annular piston (2), which region protrudes beyond the said sealing ring carrier (3) in the direction of the pressure chamber (D).

4. Slave cylinder according to one of Claims 1 to 3, **characterized in that** the region of the gasket which protrudes beyond the sealing ring carrier (3) has a radially outwardly pointing sealing lip (4.1) and a radially inwardly pointing sealing lip (4.2) which seal with respect to the housing (1).

5. Slave cylinder according to one of the preceding claims, **characterized in that** the annular piston (2) has an inner annular first end side (2.3) and an outer annular second end side (2.4) in the direction of the sealing ring carrier (3) as a result of the annular groove (2.1), and **in that** the sealing ring carrier (3) has an inner ring (3.2) and an outer ring (3.3) which is connected to the latter via connecting webs (3.7), and **in that**, in the assembled state, the inner ring (3.2) bears against the first end side (2.3) and the outer ring (3.3) bears against the second end side (2.4) of the annular piston (2), and **in that** the groove sealing ring (4) reaches through the apertures (3.8) of the sealing ring carrier (3) which are formed by the inner ring (3.2), the outer ring (3.3) and the connecting webs (3.7), and can be snapped into the annular groove (2.1) of the annular piston (2).

6. Slave cylinder according to Claim 5, **characterized in that** the groove sealing ring (4) has recesses (4.3) at the end which engages into the annular piston (2), into which recesses (4.3) the connecting webs (3.7) of the sealing ring carrier (3) engage in the assembled state.

7. Slave cylinder according to one of the preceding claims, **characterized in that** the annular piston (2) and/or the sealing ring carrier (3) consist/consists of a fibre-reinforced material.

8. Slave cylinder according to one of Claims 5 to 7, **characterized in that**, at a pressure which acts in the pressure chamber (D),
- the inner ring (3.2) of the sealing ring carrier (3) is pressed against the first end side (2.3) of the annular piston (2),
- the outer ring (3.3) of the sealing ring carrier (3) is pressed against the second end side (2.4) of the annular piston (2),
- the external diameter (3.5) of the sealing ring carrier (3) is supported on the radially outer diameter (D1) of the pressure chamber (D),
- the internal diameter (3.6) of the sealing ring carrier (3) is supported on the radially inner diameter (d1) of the pressure chamber (D), and
- the groove sealing ring (4) is supported by way of the inner ring (3.2) and by way of the outer ring (3.3) of the sealing ring carrier (3).

## Revendications

1. Cylindre récepteur, en particulier réalisé à la manière d'un CSC (Concentric Slave Cylinder - cylindre esclave concentrique) qui présente un boîtier (1) dans lequel est disposé au moins un espace de pression de forme annulaire circulaire (D) dans lequel un piston (2) réalisé sous forme de piston annulaire est guidé de manière déplaçable axialement, lequel est pourvu, dans la direction de l'espace de pression (D), d'un joint d'étanchéité hermétique et le joint d'étanchéité étant fixé au piston annulaire (2) par sa région du côté du piston, **caractérisé en ce que** le piston annulaire (2) présente une rainure annulaire (2.1) dans laquelle le joint d'étanchéité, qui est réalisé sous forme de bague d'étanchéité pour rainure (4), peut être enfilé par sa région du côté du piston à travers des orifices (3.8) d'un support de bague d'étanchéité (3), de telle sorte que le support de bague d'étanchéité (3) repose entre un côté frontal du piston annulaire (2) et des lèvres d'étanchéité de la bague d'étanchéité pour rainure (4) et soit fixé au piston annulaire (2) au moyen de la bague d'étanchéité pour rainure (4).

2. Cylindre récepteur selon la revendication 1, **caractérisé en ce que** le support de bague d'étanchéité (3) se raccorde au côté frontal du piston annulaire (2) tourné dans la direction de l'espace de pression (D), traverse le joint d'étanchéité en s'engageant dans le piston annulaire (2), le joint d'étanchéité présentant, dans la direction de l'espace de pression (D), une région faisant saillie au-delà du support de bague d'étanchéité (3).

3. Cylindre récepteur selon la revendication 1 ou 2, **caractérisé en ce que** le support de bague d'étanchéité (3) supporte la région du joint d'étanchéité faisant saillie au-delà de celui-ci dans la direction de l'espace de pression (D) dans la direction du boîtier (1) et/ou du piston annulaire (2).

4. Cylindre récepteur selon l'une quelconque des revendications 1 à 3, **caractérisé en ce que** la région du joint d'étanchéité faisant saillie au-delà du support de bague annulaire (3) présente une lèvre d'étanchéité (4.1) tournée radialement vers l'extérieur et une lèvre d'étanchéité (4.2) tournée radialement vers l'intérieur, lesquelles réalisent l'étanchéité par rapport au boîtier (1).

5. Cylindre récepteur selon l'une quelconque des revendications précédentes, **caractérisé en ce que** le piston annulaire (2) présente, dans la direction du support de bague d'étanchéité (3) à travers la rainure annulaire (2.1) un premier côté frontal (2.3) annulaire intérieur et un deuxième côté frontal (2.4) annulaire extérieur et **en ce que** le support de bague d'étanchéité (3) présente une bague intérieure (3.2) et une bague extérieure (3.3) connectée à celle-ci par le biais de nervures de liaison (3.7) et **en ce que** dans l'état monté, la bague intérieure (3.2) s'applique contre le premier côté frontal (2.3) et la bague extérieure (3.3) s'applique contre le deuxième côté frontal (2.4) du piston annulaire (2) et **en ce que** la bague d'étanchéité pour rainure (4) s'engage à travers les orifices (3.8) du support de bague d'étanchéité (3) qui sont formés à travers la bague intérieure (3.2), la bague extérieure (3.3) et les nervures de liaison (3.7), et peut être enfilée dans la rainure annulaire (2.1) du piston annulaire (2).

6. Cylindre récepteur selon la revendication 5, **caractérisé en ce que** la bague d'étanchéité pour rainure (4) présente, à l'extrémité s'engageant dans le piston annulaire (2), des évidements (4.3) dans lesquels s'engagent, dans l'état monté, les nervures de liaison (3.7) du support de bague d'étanchéité (3).

7. Cylindre récepteur selon l'une quelconque des revendications précédentes, **caractérisé en ce que** le piston annulaire (2) et/ou le support de bague d'étanchéité (3) se composent d'un matériau renforcé par des fibres.

8. Cylindre récepteur selon l'une quelconque des revendications 5 à 7, **caractérisé en ce que** dans le cas d'une pression agissant dans l'espace de pression (D),
- la bague intérieure (3.2) du support de bague d'étanchéité (3) est pressée contre le premier côté frontal (2.3) du piston annulaire (2),
- la bague extérieure (3.3) du support de bague d'étanchéité (3) est pressée contre le deuxième côté frontal (2.4) du piston annulaire (2),
- le diamètre extérieur (3.5) du support de bague d'étanchéité (3) s'appuie contre le diamètre (D1) de l'espace de pression (D) situé radialement à l'extérieur,
- le diamètre intérieur (3.6) du support de bague d'étanchéité (3) s'appuie contre le diamètre (d1) de l'espace de pression (D) situé radialement à l'intérieur et
- la bague d'étanchéité pour rainure (4) est supportée par la bague intérieure (3.2) et par la bague extérieure (3.3) du support de bague d'étanchéité (3).
